# FASCICULE DE BREVET EUROPEEN

(11) **EP 3 024 714 B1**
(45) Date de publication et mention de la délivrance du brevet: **02.01.2019**
(21) Numéro de dépôt: 14750581.2
(22) Date de dépôt: 24.07.2014
(51) Int. Cl.: B62D 25/04, B62D 29/00, B62D 29/04

(54) **MONTANT LATÉRAL POUR CAISSE DE VÉHICULE AUTOMOBILE PERFECTIONNÉ**
VERBESSERTE SEITENSÄULE FÜR EINE KRAFTFAHRZEUGKAROSSERIE
IMPROVED LATERAL UPRIGHT FOR MOTOR VEHICLE BODY SHELL

(30) Priorité: 25.07.2013 FR 1357331
(43) Date de publication de la demande: 01.06.2016
(73) Titulaire: Compagnie Plastic Omnium, 69007 Lyon (FR)
(72) Inventeur: ROCHEBLAVE, Laurent, F-69100 Villeurbanne (FR)
(74) Mandataire: de la Bigne, Guillaume Michel Marie
(86) Numéro de dépôt international: PCT/FR2014/051925
(87) Numéro de publication internationale: WO 2015/011422

(56) Documents cités:
- EP-A1- 1 142 739
- EP-A1- 2 383 170
- EP-A1- 2 383 170
- WO-A1-2012/105716
- WO-A1-2012/105716
- DE-A1-102004 008 006
- DE-A1-102004 008 006
- DE-A1-102007 053 354
- DE-A1-102007 053 354
- DE-A1-102008 032 344
- DE-A1-102008 058 225
- DE-A1-102011 111 232
- US-A1- 2012 153 669

## Description

La présente invention concerne un montant pour caisse de véhicule automobile perfectionné.

Dans ce qui suit, on appelle baie d'une caisse de véhicule automobile une ouverture de la caisse formant généralement un passage pour une personne ou un accès visuel entre l'intérieur et l'extérieur du véhicule. Il existe ainsi, par exemple, des baies pour ouvrants de véhicule, pour pare-brise et pour lunette arrière.

Plus particulièrement, une caisse de véhicule automobile comprend habituellement au moins deux montants latéraux, respectivement gauche et droit, destinés chacun à séparer deux baies latérales avant et arrière de la caisse. Chaque montant latéral, encore appelé dans ce cas « pied milieu », participe à la protection de l'habitacle en formant un organe d'absorption de chocs latéraux.

Il est connu de former un montant latéral en tôle métallique en assemblant trois éléments en tôle emboutie. Un premier élément central est fabriqué, en général, en acier présentant des caractéristiques de haute résistance mécanique. Un second élément est assemblé sur le premier élément central de façon à former une doublure de celui-ci interne à l'habitacle. Un troisième élément est assemblé sur le premier élément central de façon à former une pièce d'aspect visible essentiellement de l'extérieur de l'habitacle lorsque les portières du véhicule sont ouvertes.

Après assemblage, les trois éléments en tôle emboutie forment une structure en forme générale de caisson relativement bien adaptée à l'absorption de chocs latéraux. Toutefois, un montant latéral comprenant trois éléments métalliques est relativement lourd. Par ailleurs, compte tenu des différentes fonctions des différents éléments formant le montant latéral, il est nécessaire de prévoir des métaux ayant des propriétés adaptées à chacune des fonctions. Le recours nécessaire à des métaux ayant des propriétés différentes conduit à un coût de fabrication du montant latéral relativement élevé.

EP 1 142 739 propose un organe métallique susceptible de former un montant latéral pour caisse de véhicule automobile. Plus particulièrement, EP 1 142 739 propose un montant latéral pour caisse de véhicule automobile destiné à séparer deux baies latérales avant et arrière de la caisse, du type comportant au moins un tronçon de rigidification comportant deux ailes sensiblement parallèles entre elles et reliées entre elles par une âme.

Dans EP 1 142 739, le tronçon de rigidification a une section transversale en forme générale de I formée par les deux ailes reliées entre elles par l'âme. En effet, l'âme est formée par une paroi centrale sensiblement plane reliant les deux ailes sensiblement parallèles en s'étendant sensiblement perpendiculairement à ces deux ailes. Par ailleurs, l'épaisseur de chaque aile du tronçon de rigidification varie notablement entre le bord de liaison de l'aile avec l'âme et le bord libre de cette aile, de façon que l'épaisseur du bord libre de l'aile soit notablement réduite par rapport à l'épaisseur du bord de jonction de l'aile avec l'âme.

EP 1 142 739 propose de réaliser, le cas échéant, le tronçon de rigidification a section en I en matériau composite. Mais il s'avère que, en conservant la même forme, le remplacement du métal par un matériau composite conduit à un comportement insatisfaisant du montant latéral lors d'un choc. En effet, les bords de jonction de l'âme plane avec les ailes sont relativement rectilignes et s'étendent sensiblement verticalement sur toute la hauteur du tronçon de rigidification ce qui crée une instabilité du montant lors d'un choc latéral subi par le véhicule sous l'effet d'efforts désaxés par rapport au bord de jonction de l'âme. Ceci conduit, dans le cas d'un tronçon de rigidification en matériau composite à des déformations en torsion de celui-ci indésirables lors d'un choc latéral. Un autre exemple de caisse de véhicule est donné par le document DE102007053354.

Par ailleurs, la faible épaisseur du bord libre des ailes conduit, lorsque ces ailes sont en matériau composite, à des risques de fissuration de ce bord libre susceptible de se propager vers l'âme du tronçon de rigidification.

L'invention a notamment pour but de proposer un montant latéral pour caisse de véhicule automobile relativement léger et simple à fabriquer.

À cet effet, l'invention a pour objet un montant latéral pour caisse de véhicule automobile destiné à séparer deux baies de la caisse, par exemple deux baies latérales avant et arrière, au moins une des baies étant latérale, du type comportant au moins un tronçon de rigidification comportant deux ailes sensiblement parallèles entre elles et reliées entre elles par une âme, **caractérisé en ce que** le tronçon de rigidification est en matériau composite, les ailes étant destinées à s'étendre sensiblement parallèlement à la baie latérale de la caisse, l'âme du tronçon en matériau composite formant, avec les ailes, une structure alvéolaire.

Du fait que l'âme du tronçon en matériau composite forme, avec les ailes, une structure alvéolaire, les bords de jonction de l'âme avec les ailes s'étendent suivant plus d'une direction et pas uniquement sensiblement verticalement sur toute la hauteur du tronçon de rigidification. Par ailleurs, la structure alvéolaire du montant latéral selon l'invention forme des moyens légers de rigidification de ce montant latéral qui est ainsi susceptible d'absorber efficacement des chocs latéraux subis par le véhicule.

De plus le tronçon de rigidification en matériau composite peut être fabriqué par des procédés classiques relativement simples de moulage, injection, estampage, etc.

De préférence, chaque aile du tronçon de rigidification à une épaisseur sensiblement constante.

Ainsi, en évitant de réduire l'épaisseur du bord libre des ailes, on évite les risques de fissuration de ce bord libre susceptible de fragiliserle tronçon de rigidification.

Suivant d'autres caractéristiques optionnelles de différents modes de réalisation de ce montant latéral :
- le matériau composite formant au moins une aile, de préférence formant chaque aile, comprend des fibres de renforts continues s'étendant sensiblement parallèlement à la direction longitudinale du montant, la longueur des fibres pouvant atteindre le cas échéant la longueur du tronçon de rigidification ;
- le matériau composite formant l'âme comprend des fibres de renfort coupées à orientation aléatoire ;
- le tronçon en matériau composite prolonge une partie en métal du montant, de préférence une partie inférieure en métal de ce montant ;
- la partie du montant en métal est en matériau choisi parmi l'acier ou l'aluminium comprenant, le cas échéant, du magnésium ;
- le tronçon en matériau composite est logé, au moins partiellement, dans un caisson métallique de section transversale en U comportant une âme métallique prenant appui sur une première aile du tronçon en matériau composite, la seconde aile de ce tronçon en matériau composite fermant le caisson métallique de section en U ;
- le tronçon en matériau composite a une section transversale en forme générale de I formée par les deux ailes sensiblement parallèles entre elles et l'âme, l'âme du tronçon en matériau composite comportant :
   ∘ une paroi centrale sensiblement plane reliant les deux ailes sensiblement parallèles en s'étendant sensiblement perpendiculairement à ces deux ailes, et
   ∘ des nervures en matériau composite s'étendant de part et d'autre de la paroi centrale et entre les deux ailes de façon à relier entre elles la paroi centrale et les deux ailes,
   ces nervures délimitant des alvéoles de la structure alvéolaire de l'âme ;
- les nervures délimitant les alvéoles s'étendent sensiblement perpendiculairement à la paroi centrale et aux deux ailes,
- le tronçon en matériau composite est formé par réunion de deux éléments de section transversale en U comportant chacun une âme élémentaire prolongée par deux ailes élémentaires, la paroi centrale de l'âme du tronçon en matériau composite étant formée par la jonction face contre face des âmes élémentaires des éléments de section en U et chaque aile du tronçon en matériau composite étant formée par deux ailes élémentaires des éléments de section en U s'étendant à l'opposée l'une de l'autre ;
- l'âme du tronçon en matériau composite comporte une paroi centrale ondulée reliant les deux ailes, formant des arches s'inversant en alternance et s'incurvant autour d'axes imaginaires sensiblement perpendiculaires aux ailes, ces arches délimitant des alvéoles de la structure alvéolaire de l'âme ;
- l'âme du tronçon en matériau composite comporte de plus des nervures reliant entre elles la paroi centrale et les deux ailes ;
- les nervures sont inclinées par rapport aux axes autour desquels s'incurvent les arches et, le cas échéant, se croisent entre elles ;
- le matériau composite comprend un polymère choisi notamment parmi un polymère thermoplastique ou un polymère thermodurcissable, par exemple un polyamide (PA, notamment PA 6 ou PA 6.6), un poly(téréphtalate de butylène) (PBT), un mélange de polycarbonate et de poly(téréphtalate de butylène) (PC-PBT), un poly(méthacrylate de méthyle) (PMMA), ou un vinylester (VE), un SMC (conformément au sigle anglais pour « Sheet Moulding Compound »), un époxy (EP), ou un polyester ;
- le matériau composite comprend des fibres de renfort en matériau choisi parmi le verre, le carbone ou l'acier, et agencées suivant une structure choisie parmi une structure tissée, une nappe unidirectionnelle non tissée cousue du type NCF (correspondant au signe anglais pour « Non Crimp Fabrics ») le cas échéant biaxiale ou une structure tressée.

L'invention sera mieux comprise à la lecture de la description qui va suivre, donnée uniquement à titre d'exemple, et faite en se référant aux dessins annexés dans lesquels :
- la figure 1 est une vue en perspective en élévation d'un montant latéral pour véhicule automobile, selon un premier mode de réalisation de l'invention ;
- la figure 2 est une vue schématique en coupe, suivant la ligne II-II de la figure 1, montrant en plus un caisson métallique ;
- la figure 3 est une vue similaire à la figure 1 d'un montant latéral pour véhicule automobile selon un deuxième mode de réalisation de l'invention ;
- la figure 4 est une vue similaire à la figure 2 d'un montant latéral pour véhicule automobile selon un troisième mode de réalisation de l'invention ;
- la figure 5 est une vue similaire à la figure 1 d'un montant latéral pour véhicule automobile selon un quatrième mode de réalisation de l'invention ;
- la figure 6 est une vue en coupe suivant le plan VI-VI de la figure 5.

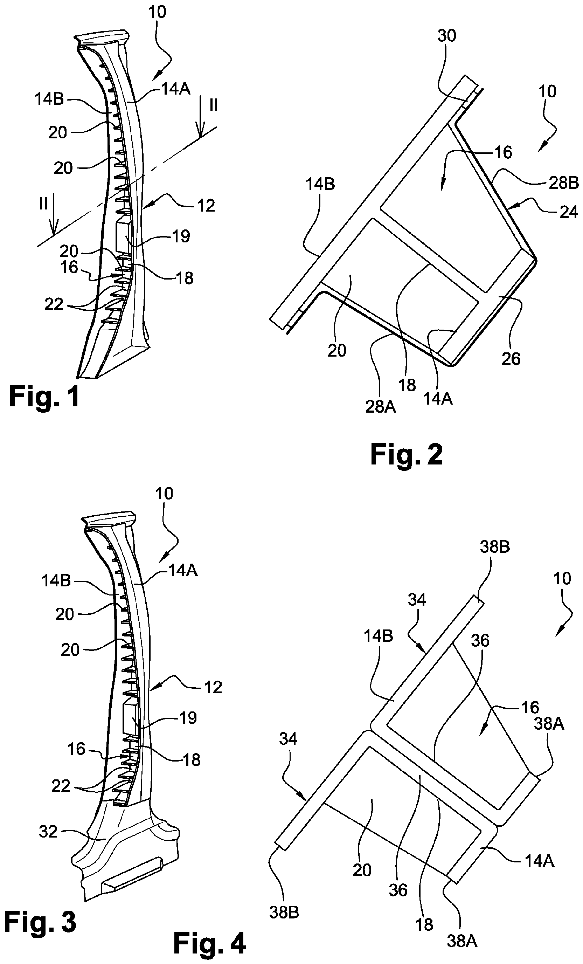

On a représenté sur les figures 1 et 2 un montant latéral 10 pour caisse de véhicule automobile, encore appelé « pied milieu », selon un premier mode de réalisation de l'invention.

Ce montant 10 est destiné à séparer deux baies latérales avant et arrière de la caisse du véhicule automobile.

Le montant latéral 10 comprend au moins un tronçon de rigidification 12 en matériau composite. Dans l'exemple représenté sur les figures 1 et 2, le tronçon de rigidification 12 s'étend sur toute la hauteur du montant latéral 10.

Le tronçon de rigidification 12 comporte deux ailes 14A, 14B sensiblement parallèles entre elles et reliées entre elles par une âme 16.

Les ailes 14A, 14B sont destinées à s'étendre sensiblement parallèlement aux baies de la caisse, c'est-à-dire sensiblement parallèlement à un plan vertical longitudinal médian de la caisse. L'âme 16 du tronçon en matériau composite 12 forme, avec les ailes 14A, 14B, une structure alvéolaire assurant une rigidification efficace de ce tronçon 12.

Le matériau composite comprend un polymère choisi notamment parmi un polymère thermoplastique ou un polymère thermodurcissable, par exemple un polyamide (PA, notamment PA 6 ou PA 6.6), un poly(téréphtalate de butylène) (PBT), un mélange de polycarbonate et de poly(téréphtalate de butylène) (PC-PBT), un poly(méthacrylate de méthyle) (PMMA), ou un vinylester (VE), un SMC (conformément au sigle anglais pour Sheet Moulding Compound), un époxy (EP), ou un polyester.

Par ailleurs, le matériau composite comprend des fibres de renfort en matériau choisi, de préférence, parmi le verre, le carbone ou l'acier, et agencées, de préférence, suivant une structure choisie parmi une structure tissée, une nappe unidirectionnelle non tissée cousue du type NCF (correspondant au signe anglais pour « Non Crimp Fabrics ») le cas échéant biaxiale ou une structure tressée.

En se référant à la figure 2, on notera que chaque aile 14A, 14B a une épaisseur sensiblement constante, par exemple choisie entre 3,5 et 6 mm. De préférence, le matériau composite formant au moins une aile, de préférence formant chaque aile 14A, 14B, comprend des fibres de renforts continues s'étendant sensiblement parallèlement à la direction longitudinale du montant 10.Le cas échéant la longueur des fibres continues peut atteindre la longueur du tronçon de rigidification.

De préférence, le matériau composite formant l'âme 16, plus particulièrement la paroi centrale 18 et les nervures 20, comprend des fibres de renfort coupées à orientation aléatoire.

En se référant aux figures 1 et 2, on voit que le tronçon en matériau composite 12 a une section transversale en forme générale de I formée par les deux ailes 14A, 14B sensiblement parallèles entre elles et l'âme 16.

Plus particulièrement, l'âme du tronçon 12 comporte une paroi centrale 18, sensiblement plane, d'épaisseur sensiblement constante, par exemple choisie entre 3,5 et 6 mm. La paroi centrale 18 relie les deux ailes 14A, 14B en s'étendant sensiblement perpendiculairement à ces deux ailes 14A, 14B.

Le cas échéant, la paroi centrale 18 comporte une platine 19 formant support pour une gâche (non représentée) d'un dispositif de verrouillage de porte du véhicule.

Par ailleurs, l'âme du tronçon 12 comporte des nervures 20 en matériau composite s'étendant de part et d'autre de la paroi centrale 18 et entre les deux ailes 14A, 14B de façon à relier entre elles la paroi centrale 18 et les deux ailes 14A, 14B.

Ainsi, les nervures 20 délimitent des alvéoles 22 de la structure alvéolaire de l'âme 16. On notera que, dans l'exemple illustré, ces nervures 20 s'étendent sensiblement perpendiculairement à la paroi centrale 18 et aux deux ailes 14A, 14B. L'épaisseur des nervures 20 est par exemple comprise entre 2 et 6 mm, en étant le cas échéant évolutive pour avoir un profil en dépouille. Les nervures 20 sont par exemple espacées entre elles d'environ 40 à 60 mm, le montant 10 ayant une hauteur d'environ 1 200 mm.

En se référant à la figure 2, on voit que le tronçon de rigidification 12 est logé, au moins partiellement, dans un caisson métallique 24 de section transversale en U. Ce caisson 24 comporte une âme métallique 26 prolongée par deux ailes métalliques 28A, 28B.

De préférence, l'âme métallique 26 prend appui, au moins localement, sur une première aile 14A du tronçon rigidification 12. La seconde aile 14B de ce tronçon rigidification 12 ferme le caisson métallique de section en U. On voit en effet sur la figure 2 que les bords libres des deux ailes métalliques 28A, 28B sont reliées aux bords de l'aile 14B de façon connue en soit, par des moyens classiques 30, par exemple des rivets, des vis, des cordons de colle ou des soudures.

Sur les figures 3 à 5 on a représenté un montant latéral 10 selon des deuxième à quatrième modes de réalisation de l'invention. Sur ces figures 3 à 5, les éléments analogues à ceux des figures précédentes sont désignés par des références identiques.

Dans le deuxième mode de réalisation de l'invention représenté sur la figure 3, le montant latéral 10 comprend un tronçon de rigidification en matériau composite 12 prolongeant une partie 32 du montant 10 distincte de ce tronçon 12. De préférence, comme illustré sur la figure 3, la partie 32 est en métal et forme une partie inférieure en métal de ce montant 10.

La liaison entre la partie en métal 32 et le tronçon de rigidification en matériau composite 12 permet de créer, en cas de choc latéral subi par la véhicule, un effet de rotule limitant la pénétration de la partie haute du montant 10 dans l'habitacle et ainsi protégeant davantage la tête d'un occupant de cet habitacle.

Le tronçon de rigidification en matériau composite 12 est relié de façon connue en soit à la partie en métal 32 par exemple par rivetage, vissage, collage ou surmoulage.

De préférence, la partie en métal 32 est dans un matériau choisi parmi l'acier ou l'aluminium comprenant, le cas échéant, du magnésium.

En variante, la partie 32 du montant 10 distincte du tronçon de rigidification 12 pourrait être en matériau composite ayant une structure destinée, en cas de choc, à dissiper de l'énergie davantage par délaminage que par rupture. Cette structure pourrait être formée par un polymère surmoulé sur un renfort tissé de fibres de verre ou de carbone.

Dans le troisième mode de réalisation de l'invention représenté sur la figure 4, le montant latéral 10 comprend un tronçon de rigidification en matériau composite 12 formé par réunion de deux éléments 34 de section transversale en U.

Chaque élément 34 comporte une âme élémentaire 36, sensiblement plane,prolongée par deux ailes élémentaires 38A, 38B.La paroi centrale 18de l'âme 16 du tronçon de rigidification 12 est formée par la jonction face contre face des âmes élémentaires 36 des éléments 34 de section en U. Chaque aile 14A, 14B du tronçon de rigidification 12est formée par deux ailes élémentaires 38A, 38B des éléments 34 de section en U s'étendant à l'opposée l'une de l'autre.

La jonction face contre face des âmes élémentaires 36 des éléments 34 de section en U peut être réalisée par exemple par fusion partielle des faces de jonction dans un moule.

Comme dans les deux modes de réalisation précédents, les nervures en matériau composite 20 s'étendent de part et d'autre de la paroi centrale 18 (formée par les deux âmes élémentaires 36 réunies)entre les deux ailes 14A, 14B (formées par les ailes élémentaires 38A, 38B) de façon à relier entre elles la paroi centrale 18 et les deux ailes 14A, 14B.

De préférence, dans ce troisième mode de réalisation de l'invention, le matériau composite formant chaque aile 14A, 14B (formée par les ailes élémentaires 38A, 38B) ainsi que la paroi centrale 18 (formée par les deux âmes élémentaires 36 réunies), comprend des fibres de renforts continues s'étendant sensiblement parallèlement à la direction longitudinale du montant 10.

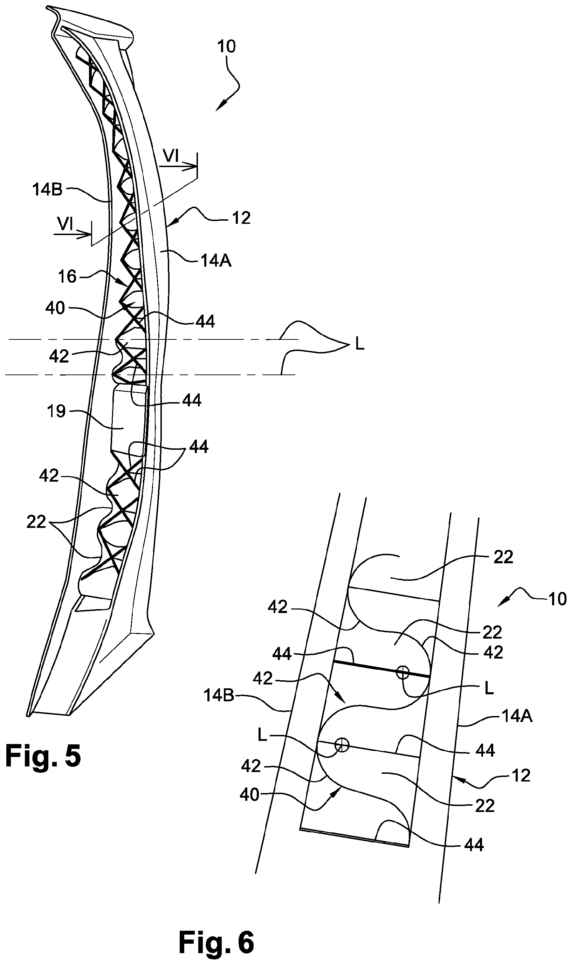

Dans le quatrième mode de réalisation de l'invention représenté sur les figures 5 et 6, l'âme 16 du tronçon de rigidification en matériau composite 12 comporte une paroi centrale ondulée en matériau composite 40. Cette paroi 40 relie les deux ailes 14A,14B. Les ondulations de la paroi 40 forment des arches 42 s'inversant en alternance et s'incurvant autour d'axes imaginaires L sensiblement perpendiculaires aux ailes 14A, 14B, ces arches42 délimitant les alvéoles 22 de la structure alvéolaire de l'âme 16.

De préférence, le tronçon de rigidification 12 comporte de plus des nervures 44 reliant entre elles la paroi centrale 40 et les deux ailes 14A, 14B. Avantageusement, les nervures 44 sont inclinées par rapport aux axes L et, le cas échéant, comme dans l'exemple représenté sur la figure 5, se croisent entre elles.

Dans ce quatrième mode de réalisation, l'âme 16, plus particulièrement la paroi centrale 40 et les nervures 44,est formée dans un matériau composite identique à l'un de ceux proposés pour la paroi centrale 18 et les nervures 20 des modes de réalisation précédents.

Le tronçon de rigidification 12 selon les différents modes de réalisation décrits ci-dessus peut être fabriqué par tout procédé connu approprié, par exemple par un procédé de compression, un procédé d'injection, un procédé d'estampage, le cas échéant réalisé au moyen d'un moule d'injection et de sur-injection, ou par un procédé d'estampage de produits intermédiaires semi-finis (encore appelés « prépreg »).

On notera que dans un procédé de fabrication du tronçon de rigidification en matériau composite du type à compression, les fibres de renfort coupées susceptibles d'être utilisée sont une longueur généralement comprise entre 25 et 50 mm.

Par contre, dans un procédé de fabrication du tronçon de rigidification en matériau composite du type à injection, les fibres de renfort coupées susceptibles d'être utilisée sont une longueur généralement comprise 0,2 et 2 mm.

L'invention n'est pas limitée aux modes de réalisation décrits ci-dessus et d'autres modes de réalisation apparaîtront clairement à l'homme du métier.

En particulier, l'invention ne se limite pas à un montant latéral pour caisse de véhicule automobile appelé « pied milieu », mais concerne tout montant latéral destiné à séparer deux baies de la caisse telles que l'une au moins des baies soit latérale. Ainsi, l'invention peut concerner un montant latéral destiné à séparer une baie latérale d'ouvrant et un pare-brise ou bien une baie latérale d'ouvrant et une lunette arrière.

## Revendications

1. Montant latéral pour caisse de véhicule automobile destiné à séparer deux baies de la caisse, par exemple deux baies latérales avant et arrière, au moins une des baies étant latérale, du type comportant au moins un tronçon de rigidification (12) comportant deux ailes (14A,14B) sensiblement parallèles entre elles et reliées entre elles par une âme (16), le tronçon de rigidification (12) étant en matériau composite, les ailes (14A,14B) étant destinées à s'étendre sensiblement parallèlement à la baie latérale de la caisse, l'âme (16) du tronçon en matériau composite (12) formant, avec les ailes, une structure alvéolaire ; **caracterisé en ce que** le tronçon en matériau composite (12) a une section transversale en forme générale de I formée par les deux ailes (14A,14B) sensiblement parallèles entre elles et l'âme (16), l'âme (16) du tronçon en matériau composite (12) comportant :
- une paroi centrale (18) sensiblement plane reliant les deux ailes (14A,14B) sensiblement parallèles en s'étendant sensiblement perpendiculairement à ces deux ailes (14A,14B), et
- des nervures (20) en matériau composite s'étendant de part et d'autre de la paroi centrale (18) et entre les deux ailes (14A, 14B) de façon à relier entre elles la paroi centrale(18) et les deux ailes (14A, 14B),
ces nervures (20) délimitant des alvéoles (22) de la structure alvéolaire de l'âme (16).

2. Montant latéral selon la revendication 1, dans lequel les nervures (20) délimitant les alvéoles (22) s'étendent sensiblement perpendiculairement à la paroi centrale (18) et aux deux ailes (14A,14B),

3. Montant latéral selon l'une quelconque des revendications précédentes, dans lequel le tronçon en matériau composite (12)est formé par réunion de deux éléments (34) de section transversale en U comportant chacun une âme élémentaire(36) prolongée par deux ailes élémentaires (38A, 38B), la paroi centrale (18) de l'âme (16) du tronçon en matériau composite (12) étant formée par la jonction face contre face des âmes élémentaires (36) des éléments (34) de section en U et chaque aile (14A,14B) du tronçon en matériau composite (12) étant formée par deux ailes élémentaires (38A, 38B) des éléments (34) de section en U s'étendant à l'opposée l'une de l'autre.

4. Montant latéral pour caisse de véhicule automobile destiné à séparer deux baies de la caisse, par exemple deux baies latérales avant et arrière, au moins une des baies étant latérale, du type comportant au moins un tronçon de rigidification (12) comportant deux ailes (14A,14B) sensiblement parallèles entre elles et reliées entre elles par une âme (16), le tronçon de rigidification (12) étant en matériau composite, les ailes (14A,14B) étant destinées à s'étendre sensiblement parallèlement à la baie latérale de la caisse, l'âme (16) du tronçon en matériau composite (12) formant, avec les ailes, une structure alvéolaire, **caractérisé en ce que** l'âme (16) du tronçon en matériau composite (12) comporte une paroi centrale ondulée (40) reliant les deux ailes (14A,14B), formant des arches(42) s'inversant en alternance et s'incurvant autour d'axes imaginaires (L) sensiblement perpendiculaires aux ailes (14A,14B), ces arches(42) délimitant des alvéoles (22) de la structure alvéolaire de l'âme.

5. Montant latéral selon la revendication 4, dans lequel l'âme du tronçon en matériau composite (12) comporte de plus des nervures(44) reliant entre elles la paroi centrale (40) et les deux ailes (14A,14B).

6. Montant latéral selon la revendication 5, dans lequel les nervures (44) sont inclinées par rapport aux axes(L) autour desquels s'incurvent les arches (42) et, le cas échéant, se croisent entre elles.

7. Montant latéral selon l'une des revendications précédentes, dans lequel chaque aile (14A, 14B) a une épaisseur sensiblement constante.

8. Montant latéral selon l'une des revendications précédentes, dans lequel le matériau composite formant au moins une aile, de préférence formant chaque aile (14A,14B), comprend des fibres de renforts continues s'étendant sensiblement parallèlement à la direction longitudinale du montant, la longueur des fibres pouvant atteindre le cas échéant la longueur du tronçon de rigidification.

9. Montant latéral selon l'une quelconque des revendications précédentes, dans lequel le matériau composite formant l'âme (16) comprend des fibres de renfort coupées à orientation aléatoire.

10. Montant latéral selon l'une quelconque des revendications précédentes, dans lequel le tronçon en matériau composite (12) prolonge une partie en métal (32) du montant, de préférence une partie inférieure en métal de ce montant.

11. Montant latéral selon la revendication 10, dans lequel la partie du montant en métal (32) est en matériau choisi parmi l'acier ou l'aluminium comprenant, le cas échéant, du magnésium.

12. Montant latéral selon l'une quelconque des revendications précédentes, dans lequel le tronçon en matériau composite (12) est logé, au moins partiellement, dans un caisson métallique (24) de section transversale en U comportant une âme métallique (26) prenant appui sur une première aile (14A) du tronçon en matériau composite (12), la seconde aile (14B) de ce tronçon en matériau composite (12) fermant le caisson métallique (24) de section en U.

13. Montant latéral selon l'une quelconque des revendications précédentes, dans lequel le matériau composite comprend un polymère choisi notamment parmi un polymère thermoplastique ou un polymère thermodurcissable, par exemple un polyamide (PA, notamment PA 6 ou PA 6.6), un poly(téréphtalate de butylène) (PBT), un mélange de polycarbonate et de poly(téréphtalate de butylène) (PC-PBT), un poly(méthacrylate de méthyle) (PMMA), ou un vinylester (VE),un SMC (conformément au sigle anglais pour « Sheet Moulding Compound »), un époxy(EP),ou un polyester.

14. Montant latéral selon l'une quelconque des revendications précédentes, dans lequel le matériau composite comprend des fibres de renfort en matériau choisi parmi le verre, le carbone ou l'acier, et agencées suivant une structure choisie parmi une structure tissée, une nappe unidirectionnelle non tissée cousue du type NCF (correspondant au signe anglais pour « Non Crimp Fabrics ») le cas échéant biaxiale ou une structure tressée.

## Patentansprüche

1. Seitliche Säule für Kraftfahrzeug-Karosserie, die dazu bestimmt ist, zwei Öffnungen der Karosserie zu trennen, zum Beispiel zwei seitliche Öffnungen, eine vordere und eine hintere, wobei mindestens eine der Öffnungen seitlich ist, des Typs aufweisend mindestens einen Versteifungsabschnitt (12) mit zwei Flügeln (14A, 14B), die im Wesentlichen parallel zueinander und über einen Steg (16) miteinander verbunden sind, wobei der Versteifungsabschnitt (12) aus Verbundwerkstoff hergestellt ist, wobei die Flügel (14A, 14B) dazu bestimmt sind, sich im Wesentlichen parallel zu der seitlichen Öffnung der Karosserie zu erstrecken, wobei der Steg (16) des Abschnitts aus Verbundwerkstoff (12) mit den Flügeln eine wabenförmige Struktur bildet, **dadurch gekennzeichnet, dass** der Abschnitt aus Verbundwerkstoff (12) einen Querschnitt in der allgemeinen Form eines I hat, das von den zwei im Wesentlichen zueinander parallelen Flügeln (14A, 14B) und dem Steg (16) gebildet ist, wobei der Steg (16) des Abschnitts aus Verbundwerkstoff (12) Folgendes aufweist:
- eine im Wesentlichen flächige mittlere Wand (18), welche die zwei im Wesentlichen parallelen Flügel (14A, 14B) verbindet, indem sie sich im Wesentlichen senkrecht zu diesen zwei Flügeln (14A, 14B) erstreckt, und
- Rippen (20) aus Verbundwerkstoff, die sich auf beiden Seiten der mittleren Wand (18) und zwischen den zwei Flügeln (14A, 14B) erstrecken, so dass sie die mittlere Wand (18) und die zwei Flügel (14A, 14B) miteinander verbinden,
wobei diese Rippen (20) Waben (22) der wabenförmigen Struktur des Stegs (16) begrenzen.

2. Seitliche Säule nach Anspruch 1, wobei die Rippen (20), welche die Waben (22) begrenzen, sich im Wesentlichen senkrecht zu der mittleren Wand (18) und zu den zwei Flügeln (14A, 14B) erstrecken.

3. Seitliche Säule nach einem der vorhergehenden Ansprüche, wobei der Abschnitt aus Verbundwerkstoff (12) durch Vereinigung von zwei Elementen (34) mit U-förmigem Querschnitt gebildet ist, die jedes einen elementaren Steg (36) aufweisen, der sich über zwei elementare Flügel (38A, 38B) fortsetzt, wobei die mittlere Wand (18) des Stegs (16) des Abschnitts aus Verbundwerkstoff (12) durch die Verbindung der flächig aneinander anliegenden elementaren Stege (36) der Elemente (34) mit U-förmigem Querschnitt gebildet ist, und jeder Flügel (14A, 14B) des Abschnitts aus Verbundwerkstoff (12) von zwei elementaren Flügeln (38A, 38B) der Elemente mit U-förmigem Querschnitt gebildet ist, die sich einander gegenüberliegend erstrecken.

4. Seitliche Säule für Kraftfahrzeug-Karosserie, die dazu bestimmt ist, zwei Öffnungen der Karosserie zu trennen, zum Beispiel zwei seitliche Öffnungen, eine vordere und eine hintere, wobei mindestens eine der Öffnungen seitlich ist, des Typs aufweisend mindestens einen Versteifungsabschnitt (12) mit zwei Flügeln (14A, 14B), die im Wesentlichen parallel zueinander und über einen Steg (16) miteinander verbunden sind, wobei der Versteifungsabschnitt (12) aus Verbundwerkstoff hergestellt ist, wobei die Flügel (14A, 14B) dazu bestimmt sind, sich im Wesentlichen parallel zu der seitlichen Öffnung der Karosserie zu erstrecken, wobei der Steg (16) des Abschnitts aus Verbundwerkstoff (12) mit den Flügeln eine wabenförmige Struktur bildet, **dadurch gekennzeichnet, dass** der Steg (16) des Abschnitts aus Verbundwerkstoff (12) eine gewellte mittlere Wand (40) aufweist, welche die zwei Flügel (14A, 14B) verbindet und Wölbungen (42) bildet, die sich abwechselnd umkehren und sich um imaginäre, zu den Flügeln (14A, 14B) im Wesentlichen senkrechte Achsen (L) krümmen, wobei diese Wölbungen (42) Waben (22) der wabenförmigen Struktur des Stegs begrenzen.

5. Seitliche Säule nach Anspruch 4, wobei der Steg des Abschnitts aus Verbundwerkstoff (12) darüber hinaus Rippen (44) aufweist, welche die mittlere Wand (40) und die zwei Flügel (14A, 14B) miteinander verbinden.

6. Seitliche Säule nach Anspruch 5, wobei die Rippen (44) relativ zu den Achsen (L) geneigt sind, um die sich die Wölbungen (42) krümmen und sich gegebenenfalls miteinander kreuzen.

7. Seitliche Säule nach einem der vorhergehenden Ansprüche, wobei jeder Flügel (14A, 14B) eine im Wesentlichen konstante Dicke hat.

8. Seitliche Säule nach einem der vorhergehenden Ansprüche, wobei der Verbundwerkstoff, der mindestens einen Flügel, vorzugsweise jeden Flügel (14A, 14B), bildet, durchgängige Verstärkungsfasern umfasst, die sich im Wesentlichen parallel zu der Längsrichtung der Säule erstrecken, wobei die Länge der Fasern gegebenenfalls die Länge des Versteifungsabschnitts erreichen kann.

9. Seitliche Säule nach einem der vorhergehenden Ansprüche, wobei der Verbundwerkstoff, der den Steg (16) bildet, Verstärkungsfasern umfasst, die mit wabenförmiger Ausrichtung geschnitten sind.

10. Seitliche Säule nach einem der vorhergehenden Ansprüche, wobei der Abschnitt aus Verbundwerkstoff (12) einen aus Metall hergestellten Teil (32) der Säule, vorzugsweise einen aus Metall hergestellten unteren Teil dieser Säule, fortsetzt.

11. Seitliche Säule nach Anspruch 10, wobei der aus Metall hergestellte Teil (32) der Säule aus einem Werkstoff hergestellt ist, der aus Stahl oder Aluminium ausgewählt ist und gegebenenfalls Magnesium enthält.

12. Seitliche Säule nach einem der vorhergehenden Ansprüche, wobei der Abschnitt aus Verbundwerkstoff (12) mindestens teilweise in einem metallischen Gehäuse (24) mit U-förmigem Querschnitt aufgenommen mit einem metallischen Steg (26) ist, der sich auf einem ersten Flügel (14A) des Abschnitts aus Verbundwerkstoff (12) abstützt, wobei der zweite Flügel (14B) dieses Abschnitts aus Verbundwerkstoff (12) das metallische Gehäuse (24) mit U-förmigem Querschnitt verschließt.

13. Seitliche Säule nach einem der vorhergehenden Ansprüche, wobei der Verbundwerkstoff ein Polymer enthält, das insbesondere ausgewählt ist aus einem thermoplastischen Polymer oder einem duroplastischen Polymer, zum Beispiel ein Polyamid (PA, insbesondere PA6 oder PA6.6), ein Poly(butylen-Terephtalat) (PBT), ein Gemisch aus Polycarbonat und Poly(butylen-Terephtalat) (PC-PBT), ein Poly(methylmethacrylat) (PMMA), oder ein Vinylester (VE), ein SMC (gemäß der englischen Abkürzung für "Sheet Moulding Compound"), ein Epoxid (EP) oder ein Polyester.

14. Seitliche Säule nach einem der vorhergehenden Ansprüche, wobei der Verbundwerkstoff Verstärkungsfasern aus einem Werkstoff ausgewählt aus Glas, Carbon oder Stahl enthält, die gemäß einer Struktur angeordnet sind, die ausgewählt ist aus einer gewebten Struktur, einem unidirektionalen genähten Vliesgelege des NCF-Typs (entsprechend der englischen Abkürzung für "non-crimp fabrics"), gegebenenfalls biaxial, oder einer verdrillten Struktur.

## Claims

1. Lateral upright for motor vehicle body shell intended to separate two bays of the body shell, for example two lateral bays at the front and rear, at least one of the bays being lateral of the type comprising at least one stiffening section (12) comprising two side plates (14A, 14B) that are substantially parallel to one another and are connected together by a web (16), the stiffening section (12) being made of composite material, the side plates (14A, 14B) being intended to extend substantially parallel to the lateral bay of the body shell, the web (16) of the section (12) made of composite material forming, with the side plates, a honeycomb structure; **characterised in that** the section (12) made of composite material has a generally I-shaped cross-section formed by the two side plates (14A, 14B) substantially parallel to one another and the web (16), the web (16) of the section (12) made of composite material comprising:
- a substantially flat central wall (18) connecting the two substantially parallel side plates (14A, 14B) by extending substantially perpendicular to these two side plates (14A, 14B), and
- ribs (20) made of composite material extending each side of the central wall (18) and between the two side plates (14A, 14B) so as to connect the central wall (18) and the two side plates (14A, 14B) together,
these ribs (20) defining cells (22) of the honeycomb structure of the web (16).

2. Lateral upright according to claim 1, wherein the ribs (20) defining the cells (22) extend substantially perpendicular to the central wall (18) and to the two side plates (14A, 14B).

3. Lateral upright according to any one of the preceding claims, wherein the section (12) made of composite material is formed by joining two elements (34) of U-shaped cross-section each having an elementary web (36) extended by two elementary side plates (38A, 38B), the central wall (18) of the web (16) of the section (12) made of composite material being formed by the junction side against side of the elementary webs (36) of the elements (34) of U-shaped cross-section and each side plate (14A, 14B) of the section (12) made of composite material being formed by two elementary side plates (38A, 38B) of the elements (34) of U-shaped cross-section extending opposite one another.

4. Lateral upright for motor vehicle body shell intended to separate two bays of the body shell, for example two lateral bays at the front and rear, at least one of the bays being lateral of the type comprising at least one stiffening section (12) comprising two side plates (14A, 14B) that are substantially parallel to one another and are connected together by a web (16), the stiffening section (12) being made of composite material, the side plates (14A, 14B) being intended to extend substantially parallel to the lateral bay of the body shell, the web (16) of the section (12) made of composite material forming, with the side plates, a honeycomb structure, **characterised in that** the web (16) of the section (12) made of composite material includes a corrugated central wall (40) connecting the two side plates (14A, 14B), forming arches (42) inverting alternately and curving around imaginary axes (L) substantially perpendicular to the side plates (14A, 14B), these arches (42) defining cells (22) of the honeycomb structure of the web.

5. Lateral upright according to claim 4, wherein the web of the section (12) made of composite material also includes ribs (44) connecting the central wall (40) and the two side plates (14A, 14B) together.

6. Lateral upright according to claim 5, wherein the ribs (44) are inclined relative to the axes (L) around which the arches (42) curve and, where appropriate, cross each other.

7. Lateral upright according to one of the preceding claims, wherein the thickness of each side plate (14A, 14B) is substantially constant.

8. Lateral upright according to one of the preceding claims, wherein the composite material forming at least one side plate, preferably forming each side plate (14A, 14B), comprises continuous reinforcing fibres extending substantially parallel to the longitudinal direction of the upright, the length of the fibres possibly reaching, where appropriate, the length of the stiffening section.

9. Lateral upright according to any one of the preceding claims, wherein the composite material forming the web (16) comprises cut stiffening fibres of random orientation.

10. Lateral upright according to any one of the preceding claims, wherein the section (12) made of composite material extends a metal portion (32) of the upright, preferably a lower metal portion of this upright.

11. Lateral upright according to claim 10, wherein the metal portion (32) of the upright is made of either steel or aluminium, comprising, where appropriate, magnesium.

12. Lateral upright according to any one of the preceding claims, wherein the section (12) made of composite material is housed, at least partially, in a metal box (24) of U-shaped cross-section comprising a metal web (26) supported on a first side plate (14A) of the section (12) made of composite material, the second side plate (14B) of this section (12) made of composite material closing the metal box (24) of U-shaped cross-section.

13. Lateral upright according to any one of the preceding claims, wherein the composite material comprises a polymer selected in particular from a thermoplastic polymer or a thermosetting polymer, for example a polyamide (PA, especially PA 6 or PA-6.6), a polybutylene terephthalate (PBT), a mixture of polycarbonate and polybutylene terephthalate (PC-PBT), a polymethyl methacrylate (PMMA), or a vinyl ester (VE), an SMC (Sheet Moulding Compound), an epoxy (EP) or a polyester.

14. Lateral upright according to any one of the preceding claims, wherein the composite material comprises reinforcing fibres of a material selected from glass, carbon or steel, and arranged according to a structure selected from a woven structure, a non-woven stitched one-directional sheet of type NCF (Non Crimp Fabric), optionally biaxial or a braided structure.
